# EUROPÄISCHE PATENTSCHRIFT

(11) **EP 2 072 837 B1**
(45) Veröffentlichungstag und Bekanntmachung des Hinweises auf die Patenterteilung: **19.10.2011**
(21) Anmeldenummer: 08105894.3
(22) Anmeldetag: 01.12.2008
(51) Int. Cl.: F16B 13/14

(54) **Abdichtelement**
Sealing element
Elément d'étanchéité

(30) Priorität: 19.12.2007 DE 102007055878
(43) Veröffentlichungstag der Anmeldung: 24.06.2009
(73) Patentinhaber: HILTI Aktiengesellschaft, 9494 Schaan (LI)
(72) Erfinder: Herb, Armin, 86974, Apfeldorf (DE)

(56) Entgegenhaltungen:
- EP-A1- 1 150 025
- DE-U1- 9 403 384
- FR-A5- 2 159 758

## Beschreibung

Die Erfindung betrifft ein Abdichtelement zum Abdichten von Befestigungselementdurchdringungen an wasserundurchlässigen Abdichtschichten eines Bauwerks mit einem kappenförmigen Aufnahmeraum für aus dem Bohrloch austretender aushärtbarer Masse, der sich zwischen einem für die Anlage an der wasserundurchlässigen Abdichtschicht vorgesehenen Anlagebereich und einem dazu beabstandeten Flanschbereich sowie einer den Anlagebereich und den Flanschbereich verbindenden Begrenzungswand erstreckt, wobei in dem Flanschbereich eine eine Durchführachse definierende Durchführöffnung für ein chemisch verankerbares Befestigungselement vorgesehen ist, die für einen Klemmeingriff mit dem Befestigungselement von federnden, in die Durchführöffnung hineinragenden Lamellen umgeben ist.

Verschiedene Bauteile im Hochbau, wie z. B. Flachdächer und Kellerräume, sowie im Tiefbau, wie z. B. Brückentragwerke, im Tunnelbau, Deponie- und Schachtbau, müssen gegenüber äusseren Einflüssen, wie z. B. Wasser abgedichtet werden. Üblicherweise erfolgt die Abdichtung mittels der Anordnung von wasserundurchlässigen Abdichtschichten, wie Kunststofffolien, Bitumenbahnen, Anstrichen und dergleichen an beziehungsweise auf dem Bauteil. Zur Befestigung von Elementen an den abgedichteten Bauteilen werden beispielsweise chemisch verankerbare Befestigungselemente durch die Abdichtung hindurch in den Bauteilen gesetzt. Die durchbohrte wasserundurchlässige Abdichtschicht muss anschliessend vollständig abgedichtet werden.

Zur Abdichtung der durchbohrten wasserundurchlässigen Abdichtschicht wird beispielsweise ein Materialstück der Abdichtschicht, ein sogenannter Flicken, vorgesehen, der einerseits mit der wasserundurchlässigen Abdichtschicht und andererseits mit dem in dem Untergrund verankerten und aus diesem herausragenden Befestigungselement verschweisst oder verklebt wird.

Nachteilig an der bekannten Lösung ist, dass zwischen dem Materialstück und der wasserundurchlässigen Abdichtschicht sowie zwischen dem Materialstück und dem Befestigungselement die Dichtigkeit unter Baustellenbedingungen zumeist nicht gewährleistet werden kann. Zudem werden z. B. im Brückenbau hohe Anforderungen an die Wasserdichtigkeit auch bei geneigt zur Senkrechten zur Betonoberfläche angeordneten Befestigungselementen gestellt, welche mit solchen zusätzlich angeordneten Materialstücken zumeist nicht erfüllt werden können.

Aus der EP 1 150 025 A1 ist ein gattungsgemässes Abdichtelement mit einem kappenförmigen Aufnahmeraum bekannt. In dem zum Anlagebereich beabstandeten Flanschbereich ist eine Durchführöffnung vorgesehen, die für einen Klemmeingriff mit dem Befestigungselement von mehreren federnden, in die Durchführöffnung hineinragenden Lamellen umgeben ist. Der kappenförmige Aufnahmeraum ist radial von einer den Anlagebereich und den Flanschbereich verbindenden Begrenzungswand begrenzt, die von einer Sickenwand einer die Durchführachse koaxial umgebenden Verstärkungssicke gebildet ist. Das Abdichtelement lässt sich auf das Befestigungselement aufschieben und kommt im gesetzten Zustand mit der Abdichtschicht in Anlage. Die Lamellen sind in Bezug auf den gesetzten Zustand der Abdichtschicht zugewandt ausgerichtet und dringen durch den Aufnahmeraum für die aushärtbare Masse bis in den Bereich des Bohrlochs.

Nachteilig an der bekannten Lösung ist, dass beim Setzvorgang aus dem Bohrloch austretende aushärtbare Masse nur in dem Bereich zwischen den nach innen gerichteten Lamellen und der Begrenzungswand des Aufnahmeraums aufgenommen werden kann. Aufgrund der einen Anlagebereich ausbildenden Verstärkungssicke steht der radial ausserhalb der Verstärkungssicke liegende Bereich für eine vollständige Abdichtung einer Befestigungselementdurchdringung nicht zur Verfügung. Des Weiteren können das Bohrloch umgebende Erhebungen oder Verschmutzungen eine vollständige Abdichtung der Befestigungselementdurchdringung behindern, so dass die beim Setzvorgang des Befestigungselementes austretende Masse nach aussen austreten und die Umgebung beschmutzen kann, womit eine ebenfalls einwandfreie Abdichtung der Befestigungselementdurchdringung nicht mehr gewährleistet ist.

Aufgabe der Erfindung ist es, ein Abdichtelement sowie ein Abdichtverfahren mit einem derartigen Abdichtelement zu schaffen, das eine einwandfreie und einfache Abdichtung der Befestigungselementdurchdringung gewährleistet.

Die Aufgabe ist durch die Merkmale der unabhängigen Ansprüche gelöst. Vorteilhafte Weiterbildungen sind in den Unteransprüchen dargelegt.

Gemäss der Erfindung entspricht der Aussendurchmesser des Aufnahmeraums beim Anlagebereich dem 2- bis 6-fachen des Innendurchmessers der Durchführöffnung.

Aufgrund dieses Verhältnisses steht ein ausreichend grosser Aufnahmeraum zur Aufnahme von aus dem Bohrloch austretender aushärtbarer Masse zur Verfügung. Dadurch kann deren Anteil beim Injizieren in das Bohrloch ausreichend gross gewählt werden, damit beim Einführen des Befestigungselementes in das Bohrloch eine entsprechende Menge wieder aus dem Bohrloch austritt und damit eine vollständige Abdichtung der Befestigungselementdurchdringung unter dem Abdichtelement gewährleistet ist. In dem kappenförmigen Aufnahmeraum des Abdichtelementes können das Bohrloch umgebende Erhebungen oder Verschmutzungen bei einer ausreichenden Abdichtung der Befestigungselementdurchdringung aufgenommen werden. Mit den Lamellen wird das Abdichtelement im gesetzten Zustand fest an die Abdichtschicht gedrückt, was eine vollständige Abdichtung nach radial aussen sicherstellt.

Die die Durchführöffnung verengenden Lamellen durchdringen im festgelegten Zustand am Befestigungselement vorteilhaft nicht eine von dem Anlagebereich aufgespannte Ebene, womit ein sattes Anliegen des Anlagebereichs auf der wasserundurchlässigen Abdichtschicht und somit eine vorteilhafte Abdichtung gegeben ist.

Vorzugsweise weist die Begrenzungswand ausgehend vom Anlagebereich des Abdichtelementes einen ersten Wandabschnitt und zumindest einen sich an den ersten Wandabschnitt anschliessenden, zweiten Wandabschnitt auf, wobei der erste Wandabschnitt mit der Durchführachse einen ersten Winkel und der zweite Wandabschnitt mit der Durchführachse einen zweiten Winkel einschliesst, wobei der erste Winkel grösser als der zweite Winkel ist. Der kappenförmige Aufnahmeraum des Abdichtelementes weist somit eine schalenförmige Ausgestaltung mit einem flach auslaufenden Seitenrandbereich auf. Es sind zwei Aufnahmebereiche des Aufnahmeraumes für die aus dem Bohrloch austretende aushärtbare Masse ausgebildet, wobei der die Durchführachse der Durchführöffnung direkt umgebende Aufnahmebereich des Aufnahmeraums eine grössere Höhe als im auslaufenden Seitenrandbereich aufweist. Der die Durchführachse der Durchführöffnung direkt umgebende, in Bezug auf eine vom Anlagebereich aufgespannten Ebene vertiefte Aufnahmebereich des Aufnahmeraums stellt ein ausreichend grosses Volumen zur Aufnahme von das Bohrloch umgebenden Erhebungen oder Verschmutzungen zur Verfügung, womit eine einwandfreie Abdichtung der Befestigungselementdurchdringung gewährleistet ist. Der im flach auslaufenden Seitenrandbereich vorhandene andere Aufnahmebereich gewährleistet eine gleichmässige Verteilung der aus dem Bohrloch austretenden aushärtbaren Masse unter dem Abdichtelement.

Bevorzugt beträgt der erste Winkel 65° bis 85°, vorteilhaft 75° bis 80°, und der zweite Winkel 10° bis 50°, vorteilhaft 25° bis 35°, was eine vorteilhafte Verteilung der im Aufnahmeraum aufgenommenen aushärtbaren Masse sicherstellt. Hierbei wird klargestellt, dass weder die dem Aufnahmeraum zugewandte Seite des ersten Wandabschnitts noch des zumindest zweiten Wandabschnitts zwingend gradlinig verlaufen müssen. Unter den angegebenen Winkeln wird in diesem Zusammenhang die mittlere Neigung des entsprechenden Wandabschnitts von einem Übergang zum anderen Übergang verstanden.

Vorzugsweise ist die Begrenzungswand zumindest bereichsweise an ihrer dem Aufnahmeraum zugewandten Seite mit einer Fliesskontur zum gleichmässigen Verteilen der aus dem Bohrloch aushärtbaren Masse versehen, was eine vorteilhafte Verteilung der im Aufnahmeraum aufgenommenen aushärtbaren Masse sicherstellt. Die Fliesskontur ist vorteilhaft durch eine geeignete Oberflächengestaltung der dem Aufnahmeraum zugewandten Seite des entsprechenden Wandabschnitts ausgebildet.

Bevorzugt ist die Fliesskontur an dem ersten Wandabschnitt der Begrenzungswand vorgesehen, was eine vorteilhafte Verteilung der im Aufnahmeraum aufgenommenen aushärtbaren Masse sicherstellt.

Vorzugsweise weist die Fliesskontur zumindest zwei radial umlaufend angeordnete Stufen auf, wobei die Übergänge der Stufen vorteilhaft abgerundet sind. Die Stufen sind vorteilhaft koaxial zur Durchführachse der Durchführöffnung angeordnet und werden vorteilhaft bei der Fertigung des Abdichtelementes ausgebildet. Durch die stufenartige Ausgestaltung wird die Verteilung der im Aufnahmeraum aufgenommenen aushärtbaren Masse in vorteilhafter Weise sichergestellt.

In einer alternativen Ausführungsform ist die Fliesskontur beispielsweise als spiralförmig oder fächerförmig verlaufende Erhebungen oder Vertiefungen ausgebildet.

Bevorzugt ist beabstandet zum Aussenrand der Abdichtscheibe eine radial umlaufende Fliesskante als Fliessbarriere vorgesehen, die einen hohen Druck der verteilten aushärtbaren Masse in eine Richtung nach radial aussen begrenzt.

Vorzugsweise ist die Abdichtscheibe zumindest bereichsweise transparent, damit ein Anwender den Grad der Verfüllung des Aufnahmeraums und somit die geschaffene Abdichtung visuell erkennen und kontrollieren kann.

Bevorzugt ist der erste Wandabschnitt zumindest im umlaufenden Bereich zwischen dem Aussenrand und der radial umlaufenden Fliesskante transparent. Dieser Bereich umgibt in einem Abstand die Durchführöffnung umlaufend, so dass bei einer vollständigen Verfüllung dieses Bereiches eine sichere Abdichtung der Befestigungselementdurchdringung visuell wahrnehmbar ist.

Vorzugsweise sind an der Durchführöffnung zumindest zwei federnde Halteabschnitte für eine temporäre Festlegung des Abdichtelementes an einem Befestigungselement vorgesehen, so dass das Abdichtelement an einem Befestigungselement vormontiert dem Anwender zur Verfügung stellbar ist beziehungsweise in einem vordefinierten Abstand zu dem in das Bohrloch einführbaren Ende des Befestigungselementes an dem Befestigungselement festlegbar ist. Beim Einführen des Befestigungselementes weichen die federnden Halteabschnitte nach radial aussen aus und verklemmen innerhalb des Bohrlochs, so dass das Abdichtelement zusätzlich im Bohrloch klemmend gehalten ist, bis die aushärtbare Masse ausgehärtet ist.

Vorteilhaft ist das Abdichtelement aus einem Kunststoff und wird besonders vorteilhaft in einem Spritzgiessverfahren gefertigt.

Das erfindungsgemässe Verfahren zum Abdichten von Befestigungselementdurchdringungen an einer wasserundurchlässigen Abdichtschicht eines Bauwerks mit einem erfindungsgemässen Abdichtelement umfasst die folgenden Verfahrensschritte:
a) Erstellen eines Bohrlochs in den Untergrund durch die wasserundurchlässige Abdichtschicht;
b) Befüllen des Bohrlochs mit einer aushärtbaren Masse, wobei die eingebrachte Menge der aushärtbaren Masse grösser als das Differenzvolumen zwischen dem Bohrlochvolumen und dem in das Bohrloch eindringenden Teilvolumen des Befestigungselementes ist;
c) Aufschieben des Abdichtelementes auf das in das Bohrloch einzuführende Ende des Befestigungselementes; und
d) Einführen des Befestigungselementes in das Bohrloch, wobei das Abdichtelement nach Anlage an der Abdichtschicht die Befestigungselementdurchdringung nach aussen abdichtet und aus dem Bohrloch austretende aushärtbare Masse aufnimmt.

Das erfindungsgemässe Verfahren ist einfach und sicher in der Anwendung, wobei zwischen den einzelnen Arbeitsgängen keine Wartezeiten auftreten. Auf eine Vorreinigung des das Bohrloch umgebenden Bereichs kann verzichtet werden. Des Weiteren kann auch bei einer Befestigungselementdurchdringung mit einem geneigt zur Untergrundfläche verlaufenden Befestigungselement diese sicher abgedichtet werden.

Vorzugsweise wird das Abdichtelement 15 mm bis 30 mm über das Ende des Befestigungselementes geschoben, so dass beim Setzen des Befestigungselementes ein Einführabschnitt vorhanden ist, der ein einfaches Setzen des Befestigungselementes ermöglicht.

Die Erfindung wird nachstehend anhand von zwei Ausführungsbeispielen näher erläutert. Es zeigen:
- Fig.1 1: Ein erstes Ausführungsbeispiel eines Abdichtelementes in einer Grundrissdarstellung;
- Fig. 2: das Abdichtelement in einer Schnittdarstellung gemäss der Linie II-II in Fig. 1;
- Fig. 3A-C: ein erfindungsgemässes Verfahren mit einem erfindungsgemässen Abdichtelement in drei Teilschritten jeweils in einer schematischen Schnittdarstellung; und
- Fig.4: ein zweites Ausführungsbeispiel eines Abdichtelementes in einer Schnittdarstellung.

Grundsätzlich sind in den Figuren gleiche Teile mit den gleichen Bezugszeichen versehen.

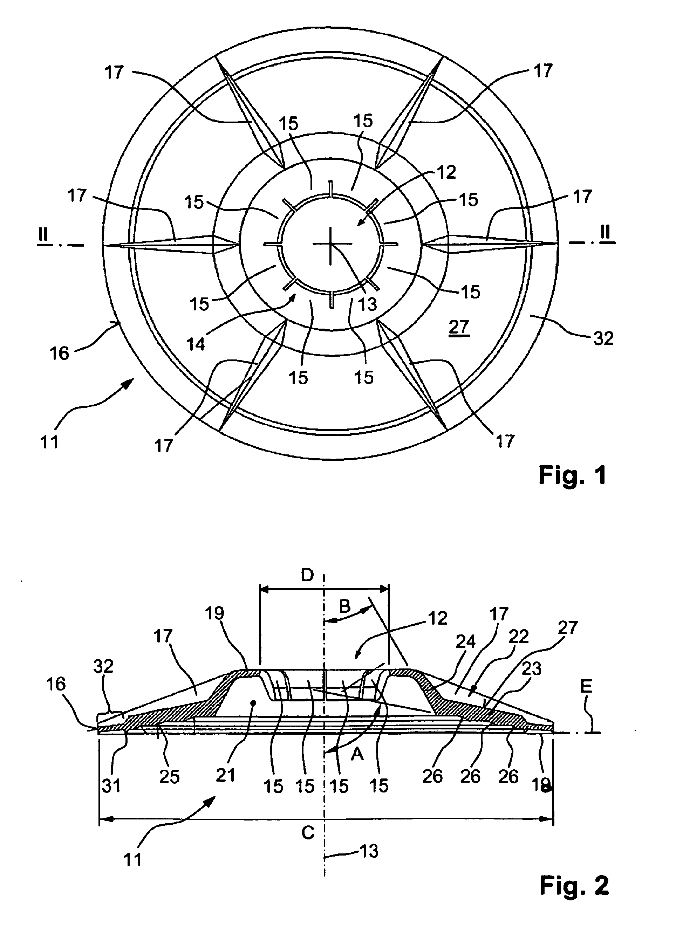

Das in der Figur 1 und 2 dargestellte Abdichtelement 11 zum Abdichten von Befestigungselementdurchdringungen an einer wasserundurchlässigen Abdichtschicht eines Bauwerks weist einen kappenförmigen Aufnahmeraum 21 für aus dem Bohrloch austretender aushärtbarer Masse auf. Der Aufnahmeraum 21 erstreckt sich zwischen einem für die Anlage an der wasserundurchlässigen Abdichtschicht vorgesehenen Anlagebereich 18 und einem dazu beabstandeten Flanschbereich 19 sowie einer den Anlagebereich 18 und den Flanschbereich 19 verbindenden Begrenzungswand 22. In dem Flanschbereich 19 ist eine eine Durchführachse 13 definierende Durchführöffnung 12 für ein chemisch verankerbares Befestigungselement vorgesehen. Die Durchführöffnung 12 ist für einen Klemmeingriff mit dem Befestigungselement von federnden, in die Durchführöffnung 12 hineinragenden Lamellen 15 umgeben. Der Aussendurchmesser C des Aufnahmeraums 21 beim Anlagebereich 18 entspricht dem 2- bis 6-fachen des Innendurchmessers D der Durchführöffnung 12.

Die Begrenzungswand 22 weist ausgehend vom Aussenrand 16 des Abdichtelementes 11 einen ersten Wandabschnitt 23 und einen sich an den ersten Wandabschnitt 23 anschliessenden, zweiten Wandabschnitt 24 auf. In diesem Ausführungsbeispiel schliesst der erste Wandabschnitt 23 mit der Durchführachse 13 einen ersten Winkel A von 80° und der zweite Wandabschnitt 24 mit der Durchführachse 13 einen zweiten Winkel B ein, so dass der erste Winkel A grösser als der zweite Winkel B ist. Der erste Winkel A kann 65° bis 85° und der zweite Winkel B kann 10° bis 50° betragen.

Die die Durchführung umgebenden Lamellen 15 sind durch Schlitze voneinander getrennt und bilden die Klemmeinrichtung für den klemmenden Eingriff des Abdichtelementes 11 an dem Befestigungselement aus. Die freien Enden sind jeweils dem Aufnahmeraum 21 zugewandt, wobei deren freie Enden eine von dem Anlagebereich 18 aufgespannten Ebene E nicht durchdringen. Zur Versteifung ist das Abdichtelement 11 an der dem Aufnahmeraum 21 abgewandten Seite 27 der Begrenzungswand 22 mit radial nach aussen verlaufenden Versteifungsrippen 17 versehen.

Der erste Wandabschnitt 23 ist an seiner dem Aufnahmeraum 21 zugewandten Seite mit einer Fliesskontur 25 zum gleichmässigen Verteilen der aus dem Bohrloch austretenden aushärtbaren Masse versehen, wobei die Fliesskontur 25 von mehreren radial umlaufend angeordneten Stufen 26 gebildet ist. Die Übergänge zwischen den Stufen 26 sind abgerundet.

Beabstandet zum Aussenrand 16 des Abdichtelementes 11 ist eine radial umlaufende Fliesskante 31 als Fliessbarriere vorgesehen. Im Bereich 32 zwischen dem Aussenrand 16 und der radial umlaufenden Fliesskante 31 ist der erste Wandabschnitt 23 des Abdichtelementes 11 transparent, so dass der Anwender zumindest in dem Bereich 32 die Verfüllung und somit die Qualität der geschaffenen Abdichtung erkennen kann. Das Abdichtelement 11 ist aus einem Kunststoff gefertigt.

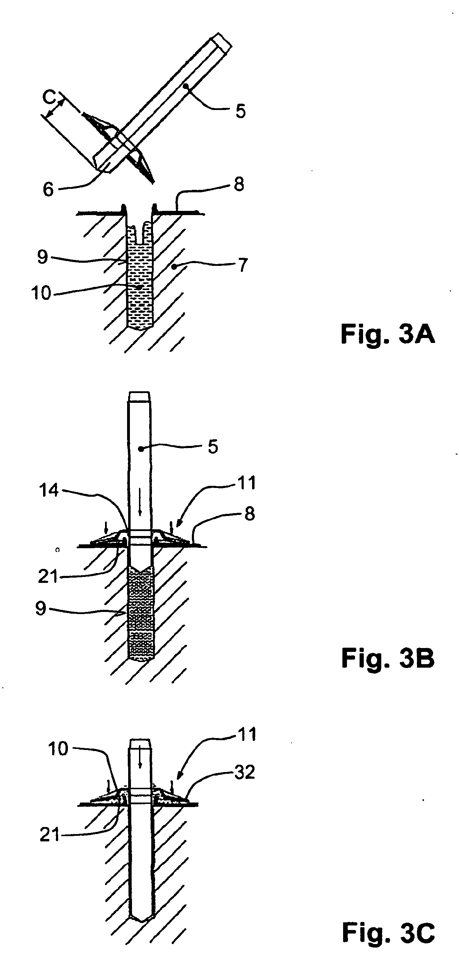

Nachfolgend wird anhand der Figuren 3A bis 3C das Verfahren zum Abdichten von Befestigungselementdurchdringungen an einer wasserundurchlässigen Abdichtschicht eines Bauwerks mit einem Abdichtelement 11 dargelegt.

Wie in Figur 3A gezeigt, wird zuerst durch die wasserundurchlässige Abdichtschicht 8 ein Bohrloch 9 in den Untergrund 7 erstellt. Dann wird das Bohrloch 9 mit einer vorbestimmten Menge einer aushärtbaren Masse 10 befüllt, wobei die eingebrachte Menge der aushärtbaren Masse 10 grösser als das Differenzvolumen zwischen dem Bohrlochvolumen und dem in das Bohrloch eindringenden Teilvolumen des Befestigungselementes 5 ist. Anschliessend wird das Abdichtelement 11, in diesem Ausführungsbeispiel in einem Abstand von C von 20 mm, auf das in das Bohrloch 9 einzuführende beziehungsweise freie Ende 6 eines Befestigungselementes 5 geschoben.

Wie in Figur 3B gezeigt, wird dann das Befestigungselement 5 in das befüllte Bohrloch 9 eingeführt, wobei das Abdichtelement 11 mit der Abdichtschicht 8 in Anlage kommt und die Befestigungselementdurchdringung nach aussen abdichtet. Über die Lamellen 15 wird das Abdichtelement 11 während dem Setzvorgang am Befestigungselement 5 gehalten und an die Abdichtschicht 8 gepresst, so dass die aus dem Bohrloch austretende aushärtbare Masse 10 im Aufnahmeraum 21 des Abdichtelementes 11 aufgenommen wird und nicht unerwünscht seitlich austreten kann. Allfällige das Bohrloch 9 umgebende Erhebungen können in dem kappenförmigen beziehungsweise schalenförmigen ausgestalteten Aufnahmeraum 21 des Abdichtelementes 11 aufgenommen werden.

Wie in der Fig. 3C dargestellt, verteilt sich die im Aufnahmeraum befindliche aushärtbare Masse 10 unterhalb des Abdichtelementes 11 gleichmässig, wobei durch den transparenten Bereich 32 des ersten Wandabschnitts 23 des Abdichtelementes 11 die Verfüllung und die Qualität der geschaffenen Abdichtung überprüft werden kann.

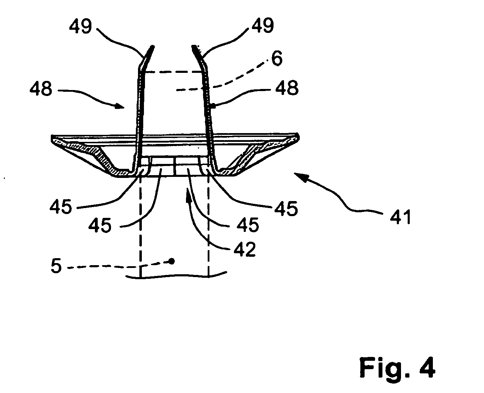

In der Figur 4 ist ein zweites Ausführungsbeispiel eines Abdichtelementes 41 gezeigt, wobei an der Durchführöffnung 42 zusätzlich zwei einander diametral gegenüberliegende, federnde Halteabschnitte 48 für eine temporäre Festlegung des Abdichtelementes 41 an einem Befestigungselement 5 vorgesehen sind. Die freien Enden 49 der Halteabschnitte 48 sind einander zugewandt. Wird das Abdichtelement 41 auf das in das Bohrloch einzuführende Ende 6 des Befestigungselementes 5 aufgeschoben, dienen die freien Enden 49 der Halteabschnitte 48 beispielsweise als Positioniermarkierung. Beim Setzen des Befestigungselementes 5 verklemmen die Halteabschnitte 48 im Ringspalt zwischen der Bohrlochwandung und der Aussenkontur des Befestigungselementes 5, so dass das Abdichtelement 41 über die Lamellen 45 an dem Befestigungselement 5 und zusätzlich über die verklemmten Halteabschnitte 48 auch im Bohrloch bis zum Aushärten der aushärtbaren Masse gehalten ist.

## Patentansprüche

1. Abdichtelement zum Abdichten von Befestigungselementdurchdringungen an wasserundurchlässigen Abdichtschichten (8) eines Bauwerks mit einem kappenförmigen Aufnahmeraum (21) für aus dem Bohrloch austretender aushärtbarer Masse (10),
der sich zwischen einem für die Anlage an der wasserundurchlässigen Abdichtschicht (8) vorgesehenen Anlagebereich (18) und einem dazu beabstandeten Flanschbereich (19) sowie einer den Anlagebereich (18) und den Flanschbereich (19) verbindenden Begrenzungswand (22) erstreckt, wobei
in dem Flanschbereich (19) eine eine Durchführachse (13) definierende Durchführöffnung (12; 42) für ein chemisch verankerbares Befestigungselement (5) vorgesehen ist,
die für einen Klemmeingriff mit dem Befestigungselement (5) von federnden, in die Durchführöffnung (12; 42) hineinragenden Lamellen (15; 45) umgeben ist, **dadurch gekennzeichnet, dass**
der Aussendurchmesser (C) des Aufnahmeraums (21) beim Anlagebereich (18) dem 2-bis 6-fachen des Innendurchmessers (D) der Durchführöffnung (12; 42) entspricht.

2. Abdichtelement nach Anspruch 1, **dadurch gekennzeichnet, dass** die Begrenzungswand (22) ausgehend vom Anlagebereich (18) des Abdichtelementes (11) einen ersten Wandabschnitt (23) und zumindest einen sich an den ersten Wandabschnitt (23) anschliessenden, zweiten Wandabschnitt (24) aufweist, wobei
der erste Wandabschnitt (23) mit der Durchführachse (13) einen ersten Winkel (A) und der zweite Wandabschnitt (24) mit der Durchführachse (13) einen zweiten Winkel (B) einschliesst, wobei der erste Winkel (A) grösser als der zweite Winkel (B) ist.

3. Abdichtelement nach Anspruch 2, **dadurch gekennzeichnet, dass** der erste Winkel (A) 65° bis 85° und der zweite Winkel (B) 10° bis 50° beträgt.

4. Abdichtelement nach Anspruch 1 oder 3, **dadurch gekennzeichnet, dass** die Begrenzungswand (22) zumindest bereichsweise an ihrer dem Aufnahmeraum (21) zugewandten Seite mit einer Fliesskontur (25) zum gleichmässigen Verteilen der aus dem Bohrloch (9) aushärtbaren Masse (10) versehen ist.

5. Abdichtelement nach Anspruch 4, **dadurch gekennzeichnet, dass** die Fliesskontur (25) an dem ersten Wandabschnitt (23) der Begrenzungswand (22) vorgesehen ist.

6. Abdichtelement nach Anspruch 4 oder 5, **dadurch gekennzeichnet, dass** die Fliesskontur (25) zumindest zwei radial umlaufend angeordnete Stufen (26) aufweist.

7. Abdichtelement nach einem der Ansprüche 1 bis 6, **dadurch gekennzeichnet, dass** beabstandet zum Aussenrand (16) das Abdichtelement (11) eine radial umlaufende Fliesskante (31) als Fliessbarriere vorgesehen ist.

8. Abdichtelement nach einem der Ansprüche 1 bis 7, **dadurch gekennzeichnet, dass** das Abdichtelement (11; 41) zumindest bereichsweise transparent ist.

9. Abdichtelement nach Anspruch 8, **dadurch gekennzeichnet, dass** der erste Wandabschnitt (23) zumindest im Bereich (32) zwischen dem Aussenrand (16) und der radial umlaufenden Fliesskante (31) transparent ist.

10. Abdichtelement nach einem der Ansprüche 1 bis 9, **dadurch gekennzeichnet, dass** an der Durchführöffnung (42) zumindest zwei federnde Halteabschnitte (48) für eine temporäre Festlegung des Abdichtelementes (41) an einem Befestigungselement (5) vorgesehen sind.

11. Verfahren zum Abdichten von Befestigungselementdurchdringungen an einer wasserundurchlässigen Abdichtschicht (8) eines Bauwerks mit einem Abdichtelement (11; 41) nach einem der Ansprüche 1 bis 10, **gekennzeichnet durch** die folgenden Verfahrensschritte;
a) Erstellen eines Bohrlochs (9) in den Untergrund (7) **durch** die wasserundurchlässige Abdichtschicht (8);
b) Befüllen des Bohrlochs (9) mit einer aushärtbaren Masse (10), wobei die eingebrachte Menge der aushärtbaren Masse (10) grösser als das Differenzvolumen zwischen dem Bohrlochvolumen und dem in das Bohrloch (9) eindringenden Teilvolumen des Befestigungselementes (5) ist;
c) Aufschieben des Abdichtelementes (11; 41) auf das in das Bohrloch (9) einzuführende Ende (6) des Befestigungselementes (5); und
d) Einführen des Befestigungselementes (5) in das Bohrloch (9), wobei das Abdichtelement (11; 41) nach Anlage an der Abdichtschicht (8) die Befestigungselementdurchdringung nach aussen abdichtet und aus dem Bohrloch (9) austretende aushärtbare Masse (10) aufnimmt.

12. Verfahren nach Anspruch 11, **dadurch gekennzeichnet, dass** das Abdichtelement (11; 41) 15 mm bis 30 mm über das Ende (6) des Befestigungselementes (5) geschoben wird.

## Claims

1. Sealing element for sealing openings for fastening elements in water-impermeable sealing layers (8) of a building, comprising a cap-shaped receiving chamber (21) for receiving curable compound (10) emerging from the drill hole,
which receiving chamber (21) extends between an abutment region (18) provided for abutment against the water-impermeable sealing layer (8) and a flange region (19) spaced therefrom, and a boundary wall (22) connecting the abutment region (18) and the flange region (19),
a lead-through opening (12; 42) defining a lead-through axis (13) for a chemically anchorable fastening element (5) being provided in the flange region (19),
which lead-through opening (12; 42) is surrounded by resilient blades (15, 45) projecting into the lead-through opening (12; 42) for gripping engagement with the fastening element (5), **characterised in that**
the external diameter (C) of the receiving chamber (21) at the abutment region (18) is 2 to 6 times larger than the internal diameter (D) of the lead-through opening (12; 42).

2. Sealing element according to Claim 1, **characterised in that** the boundary wall (22) has a first wall section (23) starting from the abutment region (18) of the sealing element (11) and at least a second wall section (24) adjoining the first wall section (23),
the first wall section (23) including with the lead-through axis (13) a first angle (A) and the second wall section (24) including with the lead-through axis (13) a second angle (B), the first angle (A) being larger than the second angle (B).

3. Sealing element according to Claim 2, **characterised in that** the first angle (A) is 65° to 85° and the second angle (B) is 10° to 50°.

4. Sealing element according to Claim 1 or 3, **characterised in that** the boundary wall (22) is provided at least zonally on its side facing towards the receiving chamber (21) with a flow contour (25) for uniformly distributing the curable compound (10) emerging from the drill hole (9).

5. Sealing element according to Claim 4, **characterised in that** the flow contour (25) is provided on the first wall section (23) of the boundary wall (22).

6. Sealing element according to Claim 4 or 5, **characterised in that** the flow contour (25) has at least two steps (26) arranged in a radially circumferential manner.

7. Sealing element according to any one of Claims 1 to 6, **characterised in that** the sealing element (11) is provided, at a distance from the outer edge (16), with a radially circumferential flow edge (31) as a flow barrier.

8. Sealing element according to any one of Claims 1 to 7, **characterised in that** the sealing element (11; 41) is transparent at least zonally.

9. Sealing element according to Claim 8, **characterised in that** the first wall section (23) is transparent at least in the region (32) between the outer edge (16) and the radially circumferential flow edge (31).

10. Sealing element according to any one of Claims 1 to 9, **characterised in that** at least two resilient retaining sections (48) for temporarily fixing the sealing element (41) to a fastening element (5) are provided on the lead-through opening (42).

11. Method for sealing openings for fastening elements in a water-impermeable sealing layer (8) of a building with a sealing element (11; 41) according to any one of Claims 1 to 10, **characterised by** the following process steps:
a) producing a drill hole (9) in the substrate (7) through the water-impermeable sealing layer (8);
b) filling the drill hole (9) with a curable compound (10), the quantity of curable compound (10) introduced being greater than the difference in volume between the volume of the drill hole and the partial volume of the fastening element (5) which enters the drill hole (9);
c) placing the sealing element (11; 41) on the end (6) of the fastening element (5) to be inserted in the drill hole (9); and
d) introducing the fastening element (5) into the drill hole (9), the sealing element (11; 41) sealing the opening for the fastening element to the outside after being placed in abutment against the sealing layer (8), and receiving curable compound (10) emerging from the drill hole (9).

12. Method according to Claim 11, **characterised in that** the sealing element (11; 41) is pushed 15 mm to 30 mm over the end (6) of the fastening element (5).

## Revendications

1. Elément d'étanchéité pour rendre étanches des passages à travers des éléments de fixation sur des couches d'étanchéité imperméables à l'eau (8) d'un bâtiment, comportant un espace de réception en forme de calotte (21) pour un matériau durcissable (10) sortant d'un trou de perçage,
lequel espace de réception s'étendant entre une zone de contact (18) prévue pour entrer en contact avec la couche d'étanchéité imperméable à l'eau (8) et une zone de rebord (19) espacée de celle-ci, ainsi qu'entre une paroi de délimitation (22) reliant la zone de contact (18) et la zone de rebord (19),
dans lequel une ouverture traversante (12 ; 42) définissant un axe de traversée (13) pour un élément de fixation pouvant être ancré chimiquement (5) est prévue dans la zone de rebord (19),
laquelle ouverture est entourée de lamelles faisant ressort (15 ; 45) faisant saillie dans l'ouverture traversante (12 ; 42) pour une prise serrée avec l'élément de fixation (5),
**caractérisé en ce que** le diamètre extérieur (C) de l'espace de réception (21) dans la zone de contact (18) correspond à 2 à 6 fois le diamètre intérieur (D) de l'ouverture traversante (12 ; 42).

2. Elément d'étanchéité selon la revendication 1, **caractérisé en ce que** la paroi de délimitation (22) partant de la zone de contact (18) de l'élément d'étanchéité (11) comporte une première partie de paroi (23) et au moins une seconde partie de paroi (24) contiguë à la première partie de paroi (23),
dans lequel la première partie de paroi (23) forme un premier angle (A) avec l'axe de traversée (13) et la seconde partie de paroi (24) forme un second angle avec l'axe de traversée (13), le premier angle (A) étant plus grand que le second angle (B).

3. Elément d'étanchéité selon la revendication 2, **caractérisé en ce que** le premier angle (A) est de 65° à 85° et le second angle (B) est de 10° à 50°.

4. Elément d'étanchéité selon la revendication 1 ou 3, **caractérisé en ce que** la paroi de délimitation (22) présente, au moins dans certaines zones de son côté dirigé vers l'espace de réception (21), un contour d'écoulement (25) pour une répartition uniforme du matériau durcissable (10) à partir du trou de perçage (9).

5. Elément d'étanchéité selon la revendication 4, **caractérisé en ce que** le contour d'écoulement (25) est prévu sur la première partie de paroi (23) de la paroi de délimitation (22).

6. Elément d'étanchéité selon la revendication 4 ou 5, **caractérisé en ce que** le contour d'écoulement (25) comporte au moins deux gradins (26) agencés de manière radialement circonférentielle.

7. Elément d'étanchéité selon l'une quelconque des revendications 1 à 6, **caractérisé en ce qu'**un bord d'écoulement radialement circonférentiel (31) à distance du bord extérieur (16) de l'élément d'étanchéité (11) est prévu pour faire office de barrière à l'écoulement.

8. Elément d'étanchéité selon l'une quelconque des revendications 1 à 7, **caractérisé en ce que** l'élément d'étanchéité (11 ; 41) est transparent au moins dans certaines zones.

9. Elément d'étanchéité selon la revendication 8, **caractérisé en ce que** la première partie de paroi (23) est transparente au moins dans la zone (32) située entre le bord extérieur (16) et le bord d'écoulement radialement circonférentiel (31).

10. Elément d'étanchéité selon l'une quelconque des revendications 1 à 9, **caractérisé en ce qu'**au moins deux parties de maintien faisant ressort (48) sont prévues sur l'ouverture traversante (42) pour fixer temporairement l'élément d'étanchéité (41) sur un élément de fixation (5).

11. Procédé pour rendre étanches des passages à travers des éléments de fixation sur une couche d'étanchéité imperméable à l'eau (8) d'un bâtiment, comportant un élément d'étanchéité (11 ; 41) selon l'une quelconque des revendications 1 à 10, **caractérisé en ce qu'**il comporte les étapes suivantes consistant à :
a) former un trou de perçage (9) dans le sous-sol (7) à travers la couche d'étanchéité imperméable à l'eau (8),
b) remplir le trou de perçage (9) d'un matériau durcissable (10), la quantité introduite du matériau durcissable (10) étant plus grande que la différence de volume entre le volume du trou de perçage et le volume partiel de l'élément de fixation (5) pénétrant dans le trou de perçage (9) ,
c) placer l'élément d'étanchéité (11 ; 41) sur l'extrémité (6) de l'élément de fixation (5) à introduire dans le trou de perçage (9), et
d) introduire l'élément de fixation (5) dans le trou de perçage (9), l'élément d'étanchéité (11 ; 41) étanchéifiant vers l'extérieur le passage à travers l'élément de fixation après contact avec la couche d'étanchéité (8) et recevant le matériau durcissable (10) sortant du trou de perçage (9).

12. Procédé selon la revendication 11, **caractérisé en ce que** l'élément d'étanchéité (11 ; 41) est glissé de 15 mm à 30 mm au-dessus de l'extrémité (6) de l'élément de fixation (5).
